# EUROPÄISCHE PATENTSCHRIFT

(11) **EP 1 597 019 B1**
(45) Veröffentlichungstag und Bekanntmachung des Hinweises auf die Patenterteilung: **16.08.2006**
(21) Anmeldenummer: 04714769.9
(22) Anmeldetag: 26.02.2004
(51) Int. Cl.: B23Q 11/08, F16P 3/00

(54) **SCHUTZABDECKUNG FÜR DEN ARBEITSBEREICH EINER WERKZEUGMASCHINE**
PROTECTIVE COVERING FOR THE WORKING AREA OF A MACHINE TOOL
REVETEMENT DE PROTECTION POUR LA ZONE DE TRAVAIL D'UNE MACHINE-OUTIL

(30) Priorität: 26.02.2003 DE 20303109 U
(43) Veröffentlichungstag der Anmeldung: 23.11.2005
(73) Patentinhaber: DECKEL MAHO Pfronten GmbH, 87459 Pfronten (DE)
(72) Erfinder: JUNG, Robert, 87459 Pfronten - Ried (DE)
(74) Vertreter: Beetz & Partner
(86) Internationale Anmeldenummer: PCT/EP2004/001922
(87) Internationale Veröffentlichungsnummer: WO 2004/076121

(56) Entgegenhaltungen:
- EP-A- 0 407 599
- EP-A- 0 673 712
- DE-A- 10 123 580
- DE-C- 954 304
- US-A- 3 366 012

## Beschreibung

Die Erfindung betrifft eine Schutzabdeckung für den Arbeitsbereich einer Werkzeugmaschine, bestehend aus einer Vielzahl von rahmenförmigen Segmenten, die ineinander begrenzt verschiebbar angeordnet sind und an mindesten einem Rand je einen Dichtungsstreifen aufweisen, und aus als Scherengitter ausgebildeten Verbindungselementen, welche die rahmenförmigen Segmente miteinander verbinden, wobei die Gelenkzapfen der Scherengitter jeweils an einem rückwärtigen Schenkel je eines Segmentes befestigt sind.
Eine derartige Schutzabdeckung ist aus der EP 0 673 712 B 1 bekannt. Diese Schutzabdeckung besteht aus mehreren ineinander relativ verschiebbar angeordneten Rahmen, von denen der äußerste Rahmen fest mit einem Bauteil der Werkzeugmaschine verbunden und der innerste Rahmen an einem in mindestens einer Koordinatenachse bewegbaren Maschinenschlitten oder einem Spindelgehäuse festgelegt sind. Die Rahmen sind aus widerstandsfähigem Blech geformt und haben einen frontseitigen breiten Steg bzw. Schenkel, der den wirksamen Teil der Schutzabdeckung bildet und in seinem Randbereich eine Dichtleiste aufweist, einen Quersteg und einen rückwärtigen kürzeren Schenkel, der parallel zum vorderen Schenkel verläuft. Die vorderseitigen breiten Schenkel benachbarter Segmente überlappen sich, sodass die Gesamtheit dieser Schenkel eine quasi durchgehende Schutzwand bilden. Die inneren Rahmen bzw. rahmenförmigen Segmente sind in den jeweils äußeren Rahmen gleicher Form und größerer Abmessungen verschiebbar angeordnet und durch als Scherengitter ausgebildete Verbindungselemente miteinander verbunden, wobei die Gelenkzapfen der Scherengitter jeweils an einem rückwärtigen Schenkel je eines Segments dauerhaft befestigt sind. In der Praxis haben sich arbeitstechnische Probleme ergeben, wenn an der Maschine Wartungs- oder Instandhaltungsarbeiten durchgeführt werden und zu diesem Zweck die Schutzabdeckung ganz oder teilweise abgebaut werden muss. In diesen Fällen ist es bei der bekannten Schutzabdeckung notwendig, nicht nur die rahmenförmigen Segmente sondern auch die Scherengitter incl. ihrer jeweiligen Führungs- und Befestigungselemente zu demontieren und damit die Schutzabdeckung als Ganzes abzubauen, was mit einem entsprechenden Arbeitsaufwand verbunden war.

Aufgabe der Erfindung ist es, diese Nachteile zu vermeiden.

Der angestrebte verminderte Montageaufwand an einer Werkzeugmaschine wird erfindungsgemäß durch die Merkmale des Anspruchs 1 erreicht. Durch Lösen der zwischen dem jeweiligen Scherengitter bzw. seiner Gelenkzapfen und dem zugehörigen rahmenförmigen Segment befindlichen Verbindungsmittel können die rahmenförmigen Segmente einzeln oder auch zu mehreren abgebaut werden, wobei die Scherengitter incl. ihrer Befestigungs- und Führungselemente an der Maschine verbleiben.

Eine einerseits stabile und andererseits für die Bewegungen leichtgängige Ausführung der lösbaren Befestigungsmittel zeichnet sich dadurch aus, dass die an den rückwärtigen schmaleren Schenkel der rahmenförmigen Segmente befestigten Gelenkzapfen von einer Flanschhülse umgeben sind, auf der die beiden sich kreuzenden Arme des Scherengitters unlösbar gelagert sind, wobei diese Flanschhülse mit dem zugehörigen Gelenkzapfen lösbar verbunden ist. Zweckmäßig liegt die Flanschhülse mit ihrem Flansch an einer mit dem jeweiligen Segment fest verbundenen Distanzscheibe an und ist endseitig über eine Scheibe sowie eine Schraube mit dem jeweiligen Gelenkzapfen lösbar verbunden. Die großflächige Abstützung der Flanschhülse mittels ihres Flansches an der Distanzscheibe gewährleistet eine kippfreie Positionierung der Flanschhülse und die endseitige Schraubverbindung ergibt eine sichere beidseitige Festlegung der beiden gegeneinander verdrehbaren Arme des Scherengitters.

Eine besonders zweckmäßige Weiterbildung der Erfindung zeichnet sich dadurch aus, dass die rahmenförmigen Segmente zumindest in Teilbereichen, insbesondere in ihren unteren Bereichen, durch elastischen Andruck in dichter gegenseitiger Anlage gehalten sind. Durch den elastischen Andruck der rahmenförmigen Segmente wird eine dichte Anlage ihrer vorderseitigen breiten Schenkel erreicht, sodass Spalte zwischen den beiden vorderen Stegen bzw. Schenkeln von benachbarten rahmenförmigen Segmenten vermieden werden, durch die Spülflüssigkeit oder Späne in den Raum hinter der Schutzabdeckung gelangen könnten. Die auf die einzelnen Segmente wirkenden elastischen Andruckkräfte sollten feinfühlig einstellbar sein, damit die Leichtgängigkeit der Rahmen bei ihrem gemeinsamen gegenseitigen Verschieben nicht beeinträchtigt wird. Der elastische Andruck sollte allerdings ausreichend groß sein, damit eine ausreichend feste Anlage der randseitigen Dichtungsstreifen des einen Segments an den vorderen breiteren Schenkel des benachbarten Segments sichergestellt ist und dadurch während der Verschiebebewegungen der rahmenförmigen Segmente ein Wischereffekt erzielt wird. Ein wirksamer elastische Andruck zweier rahmenförmiger Segmente kann auf technisch einfache Weise dadurch erzielt werden, dass zumindest einige Gelenkzapfen der Scherengitter federbelastet und in ihren Flanschhülsen axial verschiebbar angeordnet sind. Zum Erhalt dieser Federbelastung kann in einer den Endteil eines Gelenkzapfens umgebenden Buchse eine auf den Gelenkzapfen einwirkende Druckfeder angeordnet sein.

Im Folgenden wird ein Ausführungsbeispiel der Erfindung anhand der Zeichnung im Einzelnen erläutert. Es zeigen:
- Fig. 1: eine Schutzabdeckung für den Arbeitsbereich einer Werkzeugmaschine in schematischer Vorderansicht;
- Fig. 2: mehrere voll ineinander geschobene rahmenförmige Segmente der Schutzabdeckung nach Fig. 1 mit ihren Verbindungsmitteln im Schnitt;
- Fig. 3: mehrere voll ineinander geschoben rahmenförmige Segmente der Schutzabdeckung nach Fig. 1 mit federbelasteten Verbindungsmitteln im Schnitt:

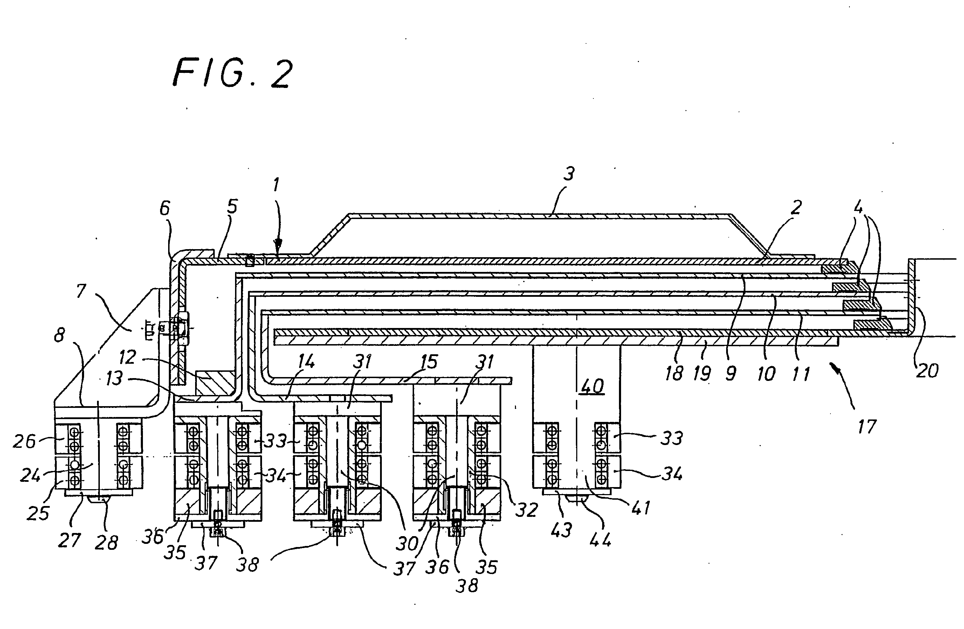

Die dargestellte Schutzabdeckung enthält einen in Draufsicht rechteckigen formsteifen Außenrahmen 1, der einen vorderseitigen breiten Schenkel 2 enthält, der von einem profilierten Blech 3 überspannt ist und mit seinem Rand auf einem Dichtungsstreifen 4 aufliegt. An diesen ebenen breiten Schenkel 2 schließt ein Winkelblech 5 an, das über ein Winkelprofil 6 am vertikalen Steg eines Winkelträgers 7 durch Schrauben 8 befestigt ist. In dem vom Außenrahmen 1 überdeckten Innenraum befinden sich drei im dargestellten Zustand ineinander geschobene jeweils rahmenförmige Segmente 9, 10, 11, die je einen oberseitigen Blechstreifen aufweisen. An dem in Fig. 2 rechten Rand jedes Blechstreifens der Segmente 9, 10, 11 ist je ein Dichtungsstreifen 4 oberseitig befestigt, wobei die Breite dieser Blechstreifen der Segmente 9, 10, 11 so gewählt ist, dass im dargestellten voll eingeschobenen Betriebszustand die Dichtungsstreifen 4 mit geringfügiger seitlicher Versetzung übereinander liegen. Wie aus Fig. 2 ersichtlich, ist der linke Rand des Blechstreifens des Segments 9 mit einem L-förmigen formsteifen Profilblech verbunden, dessen schmalerer unterer Schenkel 13 nach außen abgebogen ist und einen Versteifungsholm 12 im Winkelbereich trägt. Die Blechstreifen der beiden rahmenförmigen Segmente 10, 11 sind an ihrem in Fig. 2 linken Rand ebenfalls mit L-förmigen formsteifen Blechprofilen fest verbunden, deren horizontale Schenkel 14, 15 nach innen weisen. Unter dem rahmenförmigen Segment 11 befindet sich ein flacher Rahmen 17, der aus einem ebenen Blech 18 und einer daran unterseitig befestigten Tragplatte 19 besteht und an seinem in Fig. 2 rechten Rand eine rechtwinklige Abkröpfung 20 aufweist, deren Höhe in etwa der Höhe des Segment-Pakets entspricht. Diese Abkröpfung 20 wird an einem in zwei Koordinatenachsen bewegbaren Maschinenteil, beispielsweise an einem Spindelkopf, befestigt.

An der Unterseite des horizontalen Schenkels 8 des Trägers 7 ist ein Gelenkzapfen 24 dauerhaft befestigt, auf dem zwei Scherenarme 25, 26 drehbar gelagert sind. Am Ende des Gelenkzapfens 24 ist eine Fixierscheibe 27 mittels eines Schraubbolzens 28 lösbar befestigt.

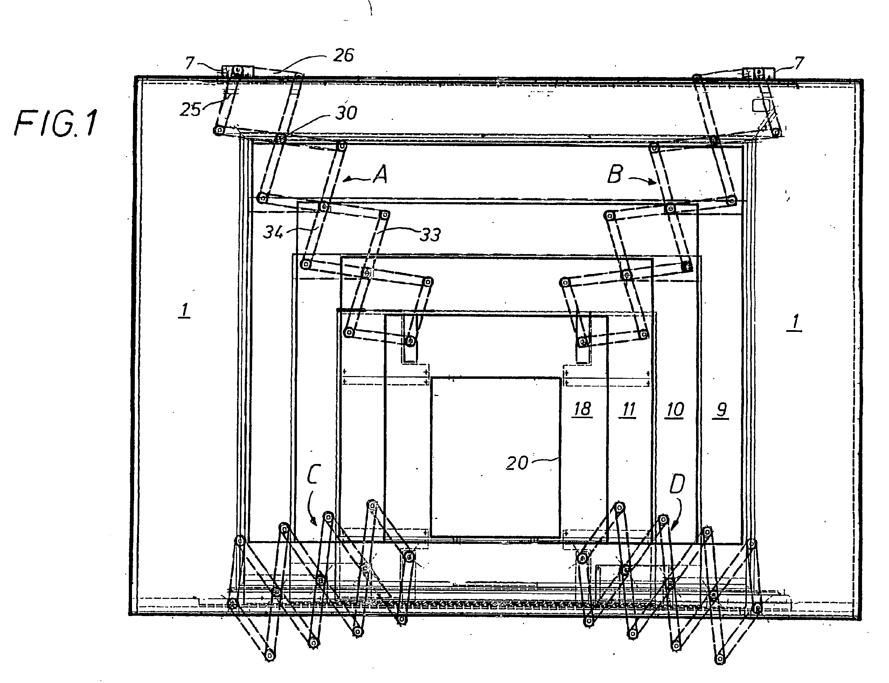

An den horizontalen rückwärtigen Schenkeln 13, 14, 15 der rahmenförmigen Segmente 9, 10, 11 sind weitere Gelenkbolzen 30 über Distanzstücke 31 von unterschiedlicher Dicke dauerhaft befestigt. Auf jedem Gelenkbolzen 30 sitzt lösbar eine Flanschhülse 32, deren Flansch am jeweiligen Distanzstück 31 großflächig anliegt. Auf jeder Flanschhülse 32 sind jeweils zwei Scherenarme 33, 34 eines der in Fig. 1 in Strichlinien dargestellten vier Scherengitter A, B, C, D in den in Fig. 2 dargestellten Wälzlagern oder in kostengünstigeren Gleitlagern gelagert. Auf dem freien Endabschnitt jeder Flanschhülse 32 sitzt ein Distanzring 35 und auf diesem eine Ringscheibe 36, die mittels eines hülsenförmigen Fortsatzes in den Endteil der Flanschhülse eingreift, beispielsweise eingeschraubt ist. Gegen die Außenfläche dieser Ringscheibe 36 drückt eine Scheibe 37 durch einen Gewindebolzen 38, der stirnseitig in den schlanken Endabschnitt des jeweiligen Gelenkzapfens 30 eingeschraubt ist. Nach Lösen dieses Gewindebolzens 38 und Abnehmen der Druckscheibe 37 ist eine axiale Lösebewegung zwischen dem jeweiligen Gelenkzapfen 30 und der aus der Flanschhülse 32, den auf der Flanschhülse gelagerten Scherengitterarmen 33, 34, dem Distanzring 35 und der Ringscheibe 36 gebildeten Baugruppe möglich.

An dem Tragblech 19 des untersten ebenen rahmenförmigen Segments 18 ist direkt ein Tragarmhalter 40 dauerhaft befestigt, auf dessen schmaleren Schwenkzapfen 41 die beiden Enden der inneren Scherengitterarme 33, 34 gelagert sind. Gegen Axialverschiebungen dieser beiden Arme 33, 34 auf dem Zapfen 41 dient eine endseitige Sicherheitsscheibe 43, die mittels eines Schraubbolzens 44 am Schwenkzapfen 41 festgelegt ist.

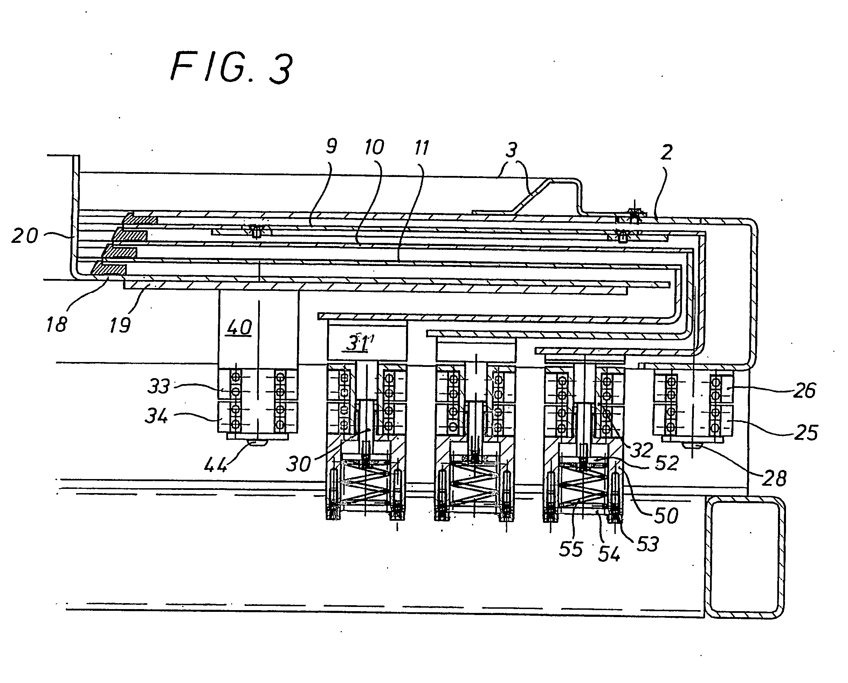

Die in Fig. 3 im Teilschnitt dargestellte Schutzabdeckung entspricht weitgehend der Ausführung nach Fig. 2, sodass einander entsprechende Bauteile mit den gleichen Bezugszeichen gekennzeichnet sind. Auch hier befinden sich die rahmenförmigen Segmente in ihrem voll eingeschobenen Zustand, d.h. der gegebenenfalls in die Abkröpfung 20 des unteren ebenen Segments 18 eingebaute Spindelkopf steht in seiner rechten Endstellung. Unterschiedlich zur Ausführung nach Fig. 2 sind die drei Verbindungsmittel zwischen den drei rahmenförmigen Segmenten 9, 10, 11 und den Scherengittern. Diese Verbindungsmittel weisen ebenfalls Gelenkbolzen 30 auf, auf denen die Flanschbuchsen 32 in Wälz- oder Gleitlagern gelagert sind. Statt des in Fig. 2 dargestellten Druck- bzw. Distanzrings wird bei der Ausführung nach Fig. 3 ein napfförmiger Halter 50 eingesetzt, der über einen hülsenförmigen axialen Fortsatz in den Innenraum der Flanschhülse 32 eingeschraubt ist. In diesen napfförmigen Halter 50 ragt der schmalere Endteil des Gelenkzapfens 30 hinein, an dem eine Scheibe 52 durch Schrauben befestigt ist. Der napfförmige Halter 50 wird nach außen durch eine lösbar mittels Schrauben 53 befestigte Scheibe 54 abgeschlossen. Zwischen der Abschlussscheibe 54 und der auf dem Gelenkzapfen 30 befestigen Scheibe 52 ist eine Druckfeder 55 eingespannt, die sich an der Abschlussscheibe 54 abstützt und eine Axialkraft auf den Gelenkzapfen 30 ausübt. Diese Kraft wird auf das rahmenförmige Segment übertragen, das auf diese Weise mit seiner Dichtungsleiste 4 gegen das benachbarte rahmenförmige Segment angedrückt wird, wodurch eine ausreichend dichte Anlage erreicht und damit Leckagen oder ein Spänedurchfall auch während der gegenseitigen Verschiebebewegungen der Segmente vermieden werden. Die von den verschiedenen Druckfedern 55 erzeugten Andruckkräfte sind feinfühlig einstellbar, um einerseits eine ausreichend dichte Anlage der Dichtleisten 4 zu erzielen, andererseits jedoch auch eine Leichtgängigkeit der rahmenförmigen Segmente während ihrer Verschiebebewegung zu gewährleisten.

Auch bei den Verbindungsmitteln nach Fig. 3 können die verschiedenen Segmente von den Lagerungen der Scherengitterarme auf einfache Weise getrennt werden, um die rahmenförmigen Segmente zu demontieren, ohne dass auch die Scherengitter ausgebaut werden müssten. Statt der Federn 55 können auch andere geeignete Andruckelemente verwendet werden, die auf Grund ihrer elastischen Verformbarkeit entsprechende Druckkräfte erzeugten.

## Patentansprüche

1. Schutzabdeckung für den Arbeitsbereich einer Werkzeugmaschine, bestehend aus
- einer Vielzahl von rahmenförmigen Segmenten (9, 10, 11, 19), die ineinander begrenzt verschiebbar angeordnet sind und an mindestens einem Rand je einen Dichtungsstreifen (4) aufweisen, und
- als Scherengitter (A - D) ausgebildeten Verbindungselementen, welche die rahmenförmigen Segmente miteinander verbinden, wobei die Gelenkzapfen (30) der Scherengitter jeweils an einem rückwärtigen Schenkel (13, 14, 15) je eines Segments befestigt sind,
**dadurch gekennzeichnet, dass**
- die Scherengitter (A - D) lösbar an den rahmenförmigen Segmenten (9, 10, 11, 18) befestigt sind,
- wobei die Gelenkzapfen (30) von je einer Flanschhülse (32) umgeben sind, auf der die beiden sich kreuzenden Arme (33, 34) des jeweiligen Scherengitters (A - D) in Wälz- oder Gleitlagern gelagert sind, und
- wobei die jeweilige Flanschhülse (32) mit dem zugehörigen Gelenkzapfen (30) lösbar verbunden ist.

2. Schutzabdeckung nach Anspruch 1,
**dadurch gekennzeichnet, dass**
die Flanschhülse (32) mit ihrem Flansch an einer mit dem Gelenkzapfen (30) und dem jeweiligen Segment fest verbundenen Distanzscheibe (31) anliegt und endseitig über eine Scheibe (37) und eine Schraube (38) mit dem jeweiligen Gelenkzapfen (30) lösbar verbunden ist.

3. Schutzabdeckung nach Anspruch 1 oder 2,
**dadurch gekennzeichnet, dass**
die rahmenförmigen Segmente (9, 10, 11, 18) zumindest in Teilbereichen durch elastischen Andruck in dichter gegenseitiger Anlage gehalten sind.

4. Schutzabdeckung nach einem der vorstehenden Ansprüche,
**dadurch gekennzeichnet, dass**
zumindest einige der Gelenkzapfen (30) federbelastet und in ihren Flanschhülsen (32) axial verschiebbar sind.

5. Schutzabdeckung nach Anspruch 4,
**dadurch gekennzeichnet, dass**
in einer den Endteil eines Gelenkzapfens (30) umgebenden napfförmigen Buchse (50) eine auf den Gelenkzapfen (30) einwirkende Druckfeder (55) angeordnet ist.

6. Schutzabdeckung nach einem der vorstehenden Ansprüche,
**dadurch gekennzeichnet, dass**
vier Scherengitter (A - D) paarweise diametral gegenüberliegend vorgesehen sind

## Claims

1. Protective cover for the work area of a machine tool comprising
- a plurality of frame-like segments (9, 10, 11, 18) disposed so as to be limitedly shiftable within each other and respectively provided with a sealing strip (4) on at least one edge, and
- connecting elements formed as slidable lattice grates (A - D) connecting the frame-like segments, the respective link pins (30) of the slidable lattice grates being fixed to a rear leg (13, 14, 15) of a respective segment,
**characterised in that**
- the slidable lattice grates (A - D) are detachably attached to the frame-like segments (9, 10, 11, 18),
- the link pins (30) are respectively surrounded by a flange sleeve (32) on which the two crossed arms (33, 34) of the respective slidable lattice grate (A - D) are supported in roller or plain bearings, and
- the respective flange sleeve (32) is detachably connected to the associated link pin (30).

2. Protective cover according to claim 1
**characterised in that**
the flange sleeve (32) contacts a spacer disk (31) fixedly connected to the link pin (30) and the respective segment with its flange and is detachably connected to the respective link pin (30) via a disk (37) and a screw (38) at its end side.

3. Protective cover according to claim 1 or 2
**characterised in that**
at least parts of the frame-like segments (9, 10, 11, 18) are held in tight contact to each other by a resilient pressure.

4. Protective cover according to one of the preceding claims
**characterised in that**
at least some of the link pins (30) are spring biased and axially shiftable within their flange sleeves (32).

5. Protective cover according to claim 4
**characterised in that**
a pressure spring (55) acting on the link pin (30) is provided in a bowl-shaped sleeve (50) surrounding the end portion of the link pin (30).

6. Protective cover according to one of the preceding claims
**characterised in that**
four slidable lattice grates (A - D) diametrically opposed in pairs are provided.

## Revendications

1. Capotage de protection du secteur de travail d'une machine-outil, se composant
- d'une pluralité de segments en forme de cadres (9, 10, 11, 19), qui sont agencés de manière à pouvoir coulisser l'un dans l'autre selon une disposition à course limitée et qui comportent respectivement, au moins au niveau d'un bord, une bandelette d'étanchéité (4) et
- d'éléments de raccordement se présentant sous la forme de parallélogrammes articulés extensibles (A - D), qui raccordent ensemble les segments en forme de cadres, les tourillons d'articulation (30) des parallélogrammes extensibles étant respectivement fixés sur une aile arrière (13, 14, 15) de chacun des segments,
**caractérisé en ce que**
- les parallélogrammes articulés extensibles (A - D) sont fixés de manière démontable sur les segments en forme de cadre (9, 10, 11, 18),
- les tourillons d'articulation (30) sont en l'occurrence respectivement entourés par une douille à collerette (32), sur laquelle les deux branches à croisement réciproque (33, 34) de chaque parallélogramme articulé extensible (A - D) sont montées par l'intermédiaire de roulements ou de paliers lisses et
- les douilles à collerette (32) respectives sont en l'occurrence raccordées de manière dissociable aux tourillons d'articulation (30) correspondants.

2. Capotage de protection selon la revendication 1,
**caractérisé en ce que**
la douille à collerette (32) repose, au niveau de sa collerette, en appui sur une rondelle d'écartement (31) solidaire du tourillon d'articulation (30) et du segment correspondant respectif, et qu'elle est raccordée, de manière dissociable, au niveau de sa portion d'extrémité par l'intermédiaire d'une rondelle (37) et d'une vis (38) au tourillon d'articulation (30) correspondant.

3. Capotage de protection selon la revendication 1 ou 2,
**caractérisé en ce que**
les segments en forme de cadre (9, 10, 11, 18) sont réciproquement maintenus en contact d'application étanche, au moins au niveau de portions partielles, sous l'effet d'une force de compression élastique.

4. Capotage de protection selon l'une des revendications précédentes,
**caractérisé en ce que**
au moins plusieurs des tourillons d'articulation (30) sont munis d'un ressort et sont à même de se déplacer dans le plan axial dans leurs douilles à collerette (32).

5. Capotage de protection selon la revendication 4
**caractérisé en ce que**
dans une douille en forme de coupelle (50) enserrant la portion d'extrémité d'un tourillon d'articulation (30), un ressort de compression (55) exerçant sa force sur le tourillon d'articulation (30) est disposé.

6. Capotage de protection selon l'une des revendications précédentes,
**caractérisé en ce que**
quatre parallélogrammes articulés extensibles (A - D) disposés par paires selon un agencement diamétralement opposé sont prévus.
